(19) Europäisches Patentamt
European Patent Office
Office européen des brevets

(11) **EP 4 575 975 A1**

(12) **DEMANDE DE BREVET EUROPEEN**

(43) Date de publication:
**25.06.2025 Bulletin 2025/26**

(21) Numéro de dépôt: **24218266.5**

(22) Date de dépôt: **09.12.2024**

(51) Classification Internationale des Brevets (IPC):
*G06T 3/4053* (2024.01)    *G06T 5/60* (2024.01)
*G06T 5/70* (2024.01)

(52) Classification Coopérative des Brevets (CPC):
**G06T 3/4053**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **19.12.2023 FR 2314472**

(71) Demandeur: **Commissariat à l'Energie Atomique et aux Energies Alternatives
75015 Paris (FR)**

(72) Inventeurs:
• **TAMAAZOUSTI, Mohamed**
**91191 Gif-sur-Yvette Cedex (FR)**
• **CHAOUAI, ZAKARIYA**
**91191 Gif-sur-Yvette Cedex (FR)**

(74) Mandataire: **Brevalex
Tour Trinity
1 B Place de la Défense
92400 Courbevoie (FR)**

(54) **MÉTHODE DE SUPER-RÉSOLUTION D'IMAGE PRÉSENTANT UNE ROBUSTESSE UNIVERSELLE**

(57)    L'invention concerne une méthode pour la super-résolution d'image. La méthode comporte une phase d'inférence (300) spécifique effectuée à partir d'un réseau de neurones (13) préalablement entraîné à produire une image de haute résolution à partir d'une image de basse résolution. La phase d'inférence (300) comporte :
- une génération (310) d'une pluralité d'images bruitées à partir d'une image de basse résolution, chaque image bruitée étant obtenue par une application aléatoire à l'image de basse résolution d'un bruit gaussien présentant un écart type prédéfini,
- une prédiction (320), par le réseau de neurones préalablement entraîné, d'une image pour chacune des images bruitées ainsi obtenues,
- une génération (330) d'une image de haute résolution correspondant à une médiane des images prédites ainsi obtenues.

[Fig. 4]

**Description**

**Domaine de l'invention**

La présente invention appartient au domaine de la super-résolution d'image. Notamment, l'invention concerne une méthode et un dispositif de traitement d'image basés sur un réseau de neurones pour améliorer la résolution d'une image. La méthode présente une robustesse universelle devant une grande variété de perturbations (bruits, attaques adverses, etc.).

**Etat de la technique**

L'objectif de la super-résolution (SR) est d'améliorer la résolution spatiale d'une image basse résolution (LR, pour « Low Resolution » en anglais) en produisant une image haute résolution (HR, pour « High Resolution » en anglais) claire et sans artefacts. La résolution de l'image HR est par exemple augmentée d'un facteur quatre par rapport à la résolution de l'image LR (par exemple passage d'une résolution $120 \times 120$ à une résolution $480 \times 480$). La super-résolution d'image est utilisée dans des domaines variés, comme par exemple l'océanographie, la surveillance, ou l'imagerie médicale.

Ces dernières années, les méthodes de super-résolution basées sur des réseaux neuronaux profonds (DNN, pour « Deep Neural Network » en anglais) ont fait des progrès considérables et surclassent désormais les méthodes traditionnelles telles que l'interpolation linéaire ou l'estimation de covariance ou de corrélation dans une image basse résolution. Ces méthodes traditionnelles ne réussissent pas, en effet, à capturer fidèlement les détails à haute fréquence dans les images, et elles produisent par conséquent souvent des résultats qui semblent flous.

La plupart des méthodes d'apprentissage automatique de super-résolution s'appuie sur des paires d'images à haute et à basse résolution utilisées pour entraîner un réseau de neurones de manière supervisée. Cependant, dans le monde réel, de telles paires d'images sont difficiles à obtenir en pratique. C'est pourquoi on procède généralement à un sous-échantillonnage bicubique d'images à haute résolution pour générer artificiellement les images à basse résolution associées. Malheureusement, cette stratégie introduit des artefacts dans les images super-résolues, en supprimant ou en modifiant des caractéristiques des images de basse résolution. Par conséquent, les réseaux de neurones de super-résolution qui sont entrainés de cette façon ont souvent du mal à généraliser les images qui ne sont pas issues d'un sous-échantillonnage bicubique (notamment les images du mode réel).

Dans les documents [1] et [2], les auteurs ont développé des méthodes pour récupérer le bruit et les détails perdus lors du sous-échantillonnage bicubique. Ces méthodes sont toutefois coûteuses en calcul car elles nécessitent de créer plusieurs modèles de réseaux de neurones, d'une part pour générer des paires d'images de haute et basse résolution qui ont les mêmes caractéristiques, et d'autre part pour faire un apprentissage d'un modèle de super-résolution à partir des données ainsi générées. En outre, les modèles obtenus sont relativement peu performants sur des images présentant un type de bruit ou de perturbation qui n'est pas présent dans les données d'entrainement.

Le document [3] décrit un modèle de super-résolution d'image de type GAN (« Generative Adversarial Network », en français « réseau antagoniste génératif ») composé de deux réseaux neuronaux : un générateur et un discriminateur. Le générateur est chargé de créer une image de haute résolution à partir d'une image de basse résolution. Le discriminateur est chargé de distinguer les images réelles des images générées. Le modèle nommé ESRGAN (acronyme anglais pour « Enhanced Super-Resolution Generative Adversarial Networks », en français « réseau antagoniste génératif amélioré pour la super-résolution ») est un modèle de super-résolution d'image qui offre des résultats de haute qualité. Comme la plupart des réseaux de neurones actuellement utilisés pour la super-résolution, ESRGAN perd en précision pour les images du mondes réels ou pour des images affectées par un léger bruit ou une attaque adverse.

Le document [4] décrit une méthode d'apprentissage pour construire un modèle robuste contre des petites perturbations. Dans ce document, les auteurs utilisent une méthode d'apprentissage adverse : dans un premier temps, une attaque adverse est utilisée pour créer des exemples qui ciblent les faiblesses du modèle ; ensuite, les exemples adverses générés sont exploités pendant l'entraînement pour améliorer la capacité du modèle à traiter des images de basse résolution bruitées. Dans ce document, l'attaque adverse utilisée est de type PGD (acronyme anglais de « Projected Gradient Descent », en français « projection du gradient de descente ») et elle prend en compte à la fois une perte au niveau des pixels (basée par exemple sur un calcul d'erreur quadratique moyenne, MSE pour « Mean Squared Error » en anglais) et une perte au niveau de la similarité perceptuelle d'image (basée sur des mesures de type LPIPS (« Learned Perceptual Image Patch Similarity »).

Un premier inconvénient de cette méthode est que l'application d'un apprentissage adverse à la super-résolution d'image est particulièrement coûteuse en calcul. Un deuxième inconvénient est que le modèle obtenu avec un apprentissage adverse spécifique n'est pas robuste contre tous les types de perturbation. Par exemple, le modèle n'est pas robuste contre un bruit gaussien avec un petit écart-type, ni contre des attaques adverses d'un type différent de celui considéré pour l'apprentissage adverse. Aussi, la précision du modèle est diminuée sur les images réelles non attaquées ou non perturbées.

Dans un autre domaine, à savoir la détection d'objet, le document [5] décrit une méthode de certification d'un réseau de neurones par une méthode de « lissage aléatoire médian » (MRS pour « Median Randomized Smoothing » en anglais) avec un échantillonnage Monte Carlo. Il apparaît toutefois qu'un grand nombre d'échantillons (de l'ordre de 2000) est nécessaire pour les procédures de classification ou de régression dans le domaine de la détection d'objet.

**Exposé de l'invention**

La présente invention a pour objectif de remédier à tout ou partie des inconvénients de l'art antérieur, notamment ceux exposés ci-avant, en proposant une méthode pour la super-résolution d'image qui reste robuste de façon universelle devant une grande variété de perturbations (bruits ou attaques adverses), et en particulier devant des perturbations qui n'ont pas nécessairement été observées par le modèle pendant son entrainement.

A cet effet, et selon un premier aspect, il est proposé par la présente invention, une méthode pour la super-résolution d'image. La méthode est mise en oeuvre par un dispositif de traitement d'image mémorisant un réseau de neurones préalablement entrainé à produire une image de haute résolution à partir d'une image de basse résolution. La méthode comporte une phase d'inférence comportant les étapes suivantes :

- une génération d'une pluralité d'images bruitées à partir d'une image de basse résolution, chaque image bruitée étant obtenue par une application aléatoire à l'image de basse résolution d'un bruit gaussien présentant un écart type prédéfini,
- une prédiction, par le réseau de neurones préalablement entrainé, d'une image pour chacune des images bruitées ainsi obtenues,
- une génération d'une image de haute résolution correspondant à une médiane des images prédites ainsi obtenues.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, l'entrainement préalable du réseau de neurones comporte une phase d'ajustement basée sur un jeu de données d'entrainement comportant un ensemble de paires d'images, chaque paire d'image comportant une version haute résolution et une version basse résolution d'une même image. La phase d'ajustement comporte, pour chaque image basse résolution du jeu de données d'entrainement, et pour chacune d'une pluralité de valeurs différentes d'écart type :

- une génération d'une pluralité d'images bruitées, chaque image bruitée étant obtenue par une application aléatoire à l'image de basse résolution considérée d'un bruit gaussien présentant un écart type égal à la valeur d'écart type considéré,
- une prédiction par le réseau de neurones d'une image de haute résolution pour chacune des images bruitées ainsi générées,
- une génération d'une image de haute résolution correspondant à une médiane des images prédites ainsi obtenues,
- un calcul d'une fonction de perte à partir de la médiane ainsi générée et de l'image haute résolution associée à l'image basse résolution considérée,
- une mise à jour de paramètres du réseau de neurones par une descente de gradient basée sur la fonction de perte.

Dans des modes particuliers de mise en oeuvre, la fonction de perte comporte une composante relative à une perte au niveau pixel et une composante relative à une perte au niveau d'une similarité perceptuelle d'image.

Dans des modes particuliers de mise en oeuvre, la valeur de l'écart type du bruit gaussien à utiliser pour la génération de la pluralité d'images bruitées pendant la phase d'inférence est prédéfinie en fonction d'une métrique de similarité perceptuelle d'image mesurée pour différentes images obtenues en sortie de la phase d'inférence et pour différentes valeurs candidates d'écart type.

Dans des modes particuliers de mise en oeuvre, la valeur de l'écart type du bruit gaussien utilisé pour la génération de la pluralité d'images bruitées est comprise entre 0.005 et 0.1.

Dans des modes particuliers de mise en oeuvre, le nombre d'images bruitées dont les prédictions sont utilisées pour la génération de la médiane pendant la phase d'inférence est compris entre 5 et 100, voire entre 10 et 50, voire entre 15 et 25.

Dans des modes particuliers de mise en oeuvre, deux valeurs différentes d'écart type sont utilisées pendant la phase d'ajustement.

Dans des modes particuliers de mise en oeuvre, les deux valeurs différentes d'écart type utilisées pendant la phase d'ajustement comportent une première valeur d'écart type comprise entre 0.01 et 0.06 et une deuxième valeur d'écart type comprise entre 0.1 et 0.6.

Dans des modes particuliers de mise en oeuvre, le nombre d'images bruitées dont les prédictions sont utilisées pour la génération d'une médiane pendant la phase d'ajustement est compris entre 2 et 8.

Dans des modes particuliers de mise en oeuvre, le réseau de neurones est un réseau antagoniste génératif.

Dans des modes particuliers de mise en oeuvre, le réseau de neurones est basé sur le modèle ESRGAN.

Dans des modes particuliers de mise en oeuvre, l'entrainement préalable du réseau de neurones comporte une phase d'entrainent adverse de type BIM, FGSM, PGD ou CW.

Selon un deuxième aspect, la présente invention concerne une méthode d'entrainement d'un réseau de neurones pour la super-résolution d'image. La méthode d'entrainement comporte une phase d'ajustement basée sur un jeu de données d'entrainement comportant un ensemble de paires d'images, chaque paire d'image comportant une version haute résolution et une version basse résolution d'une même image. La phase d'ajustement comporte, pour chaque image basse résolution du jeu de données d'entrainement, et pour chacune d'une pluralité de valeurs différentes d'écart type :

- une génération d'une pluralité d'images bruitées, chaque image bruitée étant obtenue par une application aléatoire à l'image de basse résolution considérée d'un bruit gaussien présentant un écart type égal à la valeur d'écart type considéré,
- une prédiction par le réseau de neurones d'une image de haute résolution pour chacune des images bruitées ainsi générées,
- une génération d'une image de haute résolution correspondant à une médiane des images prédites ainsi obtenues,
- un calcul d'une fonction de perte à partir de la médiane ainsi générée et de l'image haute résolution associée à l'image basse résolution considérée,
- une mise à jour de paramètres du réseau de neurones par une descente de gradient basée sur la fonction de perte.

Selon un troisième aspect, la présente invention concerne un dispositif de traitement d'image configuré pour mettre en oeuvre une méthode selon l'un quelconque des modes de mise en oeuvre précédents. En particulier, le dispositif comporte une mémoire mémorisant un réseau de neurones préalablement entrainé à produire une image de haute résolution à partir d'une image de basse résolution. Le dispositif comporte un processeur configuré pour mettre en oeuvre une phase d'inférence, à l'aide du réseau de neurones, afin de générer une image de haute résolution à partir d'une image de basse résolution. Le dispositif de traitement d'image est caractérisé en ce que la phase d'inférence comporte :

- une génération d'une pluralité d'images bruitées à partir de l'image de basse résolution, chaque image bruitée étant obtenue par une application aléatoire à l'image de basse résolution d'un bruit gaussien présentant un écart type prédéfini,
- une prédiction, par le réseau de neurones préalablement entrainé, d'une image pour chacune des images bruitées ainsi obtenues,
- une génération de l'image de haute résolution correspondant à une médiane des images prédites ainsi obtenues.

**Présentation des figures**

L'invention sera mieux comprise à la lecture de la description suivante, donnée à titre d'exemple nullement limitatif, et faite en se référant aux figures 1 à 15 qui représentent :

[Fig. 1] une représentation schématique d'une méthode de super-résolution d'image selon l'invention,

[Fig. 2] une représentation schématique d'un dispositif de traitement d'image configuré pour mettre en oeuvre la méthode de super-résolution d'image selon l'invention,

[Fig. 3] une représentation schématique des principales étapes de la phase d'inférence de la méthode de super-résolution selon l'invention,

[Fig. 4] une autre représentation schématique de la phase d'inférence illustrée à la figure 1,

[Fig. 5] une représentation schématique d'un mode particulier de mise en oeuvre de la méthode de super-résolution d'image selon l'invention, avec une phase d'ajustement préalable à la phase d'inférence,

[Fig. 6] une représentation schématique des principales étapes de la phase d'ajustement,

[Fig. 7] une autre représentation schématique de la phase d'ajustement illustrée à la figure 6,

[Fig. 8] un tableau présentant les performances d'un premier exemple de mise en oeuvre de la méthode selon l'invention (CertSR), en comparaison avec d'autres méthodes, sur des images brutes, des images bruitées et des images floutées,

[Fig. 9] un tableau présentant les performances de CertSR, en comparaison avec d'autres méthodes, sur des images attaquées par différents types d'attaques adverses, [Fig. 10] un tableau présentant les performances de CertSR, en comparaison avec d'autres méthodes, sur des images du monde réel présentant différents types de bruits naturels,

[Fig. 11] un tableau comparant les performances de différents exemples de mise en œuvre de l'invention (CertSR, MSR-FT et MSR-INF),
[Fig. 12] un tableau comparant les performances d'une mise en oeuvre de l'invention sur différents réseaux de neurones,
[Fig. 13] un tableau comparant les performances de CertSR avec une méthode de régularisation,
[Fig. 14] un tableau illustrant le choix des valeurs d'écart type utilisées dans la phase d'ajustement de CertSR,
[Fig. 15] un tableau illustrant le choix de la valeur d'écart type utilisée dans la phase d'inférence de CertSR.

Dans ces figures, des références identiques d'une figure à une autre désignent des éléments identiques ou analogues. Pour des raisons de clarté, les éléments représentés ne sont pas nécessairement à une même échelle, sauf mention contraire.

**Description détaillée de l'invention**

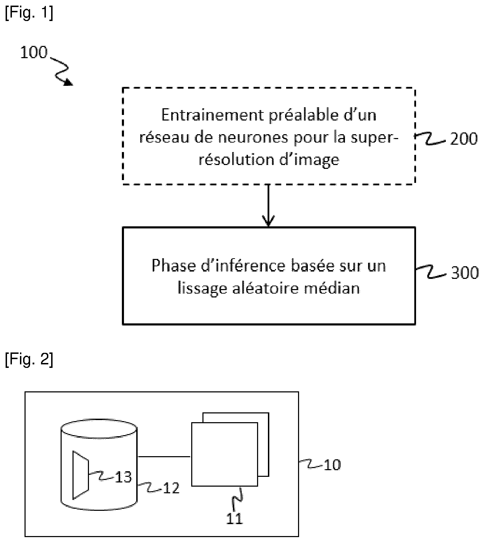

Tel qu'indiqué précédemment, la présente invention vise à proposer une méthode de super-résolution d'image qui reste robuste de façon universelle devant une grande variété de perturbations (bruits ou attaques adverses), et en particulier devant des perturbations qui n'ont pas nécessairement été observées par le modèle pendant son entrainement.
Tel qu'illustré sur la figure 1, la méthode 100 selon l'invention repose sur une phase d'inférence 300 spécifique à partir d'un réseau de neurones préalablement entrainé à produire une image de haute résolution à partir d'une image de basse résolution. Cette phase d'inférence 300 spécifique est basée sur un lissage aléatoire médian. L'entrainement préalable 200 ne fait pas nécessairement partie de la méthode 100 selon l'invention. En effet, l'invention repose principalement sur la phase d'inférence 300, et la façon dont l'entrainement préalable 200 est mis en oeuvre n'a pas nécessairement d'importance pour l'invention.
Les réseaux de neurones pour la super-résolution d'images sont généralement entrainés de façon supervisée, à partir d'un jeu de données comportant un ensemble de paires d'images à haute et à basse résolution. Rien n'empêcherait toutefois de considérer un réseau de neurones entrainé de façon non supervisée. Différents types de réseaux de neurones peuvent être envisagés. Comme on le verra par la suite, la méthode 100 selon l'invention a été abondamment testée en se basant sur un réseau antagoniste génératif, à savoir le modèle ESRGAN décrit dans [3].
La méthode 100 selon l'invention est mis en oeuvre par un dispositif de traitement d'image. La figure 2 illustre schématiquement un tel dispositif 10 de traitement d'image. Le dispositif 10 comporte une mémoire 12 dans laquelle est mémorisé le réseau de neurones 13 préalablement entrainé, ainsi qu'un ou plusieurs processeurs 11 configurés pour mettre en oeuvre la phase d'inférence 300. La mémoire 12 peut notamment comporter un ensemble de lignes de code qui, lorsqu'elles sont exécutées par le ou les processeurs 11, configurent le ou les processeurs 11 pour mettre en oeuvre la phase d'inférence 300 de la méthode 100 selon l'invention.

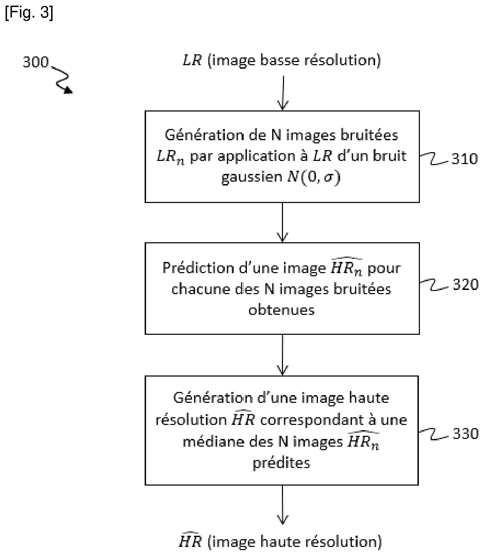

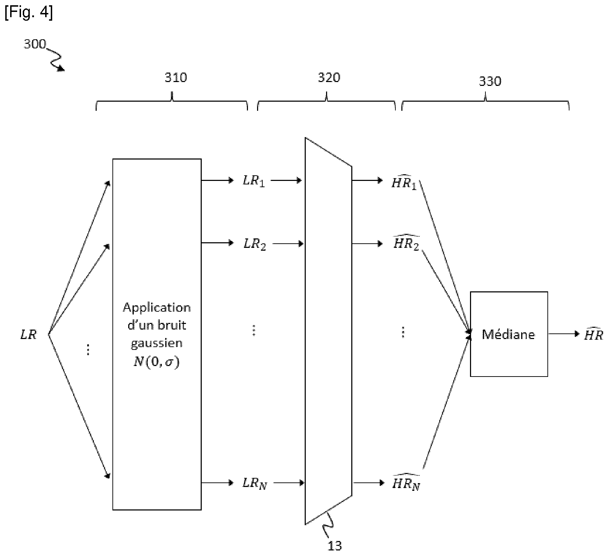

Les figures 3 et 4 représentent schématiquement les principales étapes de la phase d'inférence 300 selon l'invention. Tel qu'illustré sur ces figures, la phase d'inférence 300 vise à produire une image de haute résolution $\widehat{HR}$ à partir d'une image de basse résolution $LR$.
La phase d'inférence 300 comporte tout d'abord une étape de génération 310 de plusieurs images bruitées à partir de l'image de basse résolution. Chaque image bruitée est obtenue par une application à l'image de basse résolution $LR$ d'un échantillon aléatoire de bruit gaussien $N(0, \sigma)$ présentant une moyenne nulle et un écart type $\sigma$ prédéfini. On note N le nombre d'images bruitées obtenues : $LR_1, LR_2, ..., LR_n, ..., LR_N$. Chaque image bruitée $LR_n$ correspond donc à l'addition, pixel par pixel, de l'image de basse résolution $LR$ avec un tirage aléatoire du bruit gaussien $N(0, \sigma)$. Le tirage est indépendant et identiquement distribué pour chaque pixel de chaque image.
Selon un premier exemple, il est envisageable, pour chaque pixel, de faire un tirage aléatoire indépendant et identiquement distribué et d'appliquer la valeur tirée à chacune des composantes R, G et B du pixel (un tirage par pixel). Selon un deuxième exemple, il est envisageable de faire un tirage aléatoire indépendant et identiquement distribué pour chacune des composantes R, G et B du pixel (trois tirages par pixel).
La phase d'inférence 300 comporte ensuite une étape de prédiction 320, par le réseau de neurones 13 préalablement entrainé, d'une image de haute résolution $\widehat{HR_n}$ pour chacune des images bruitées $LR_n$ obtenues à l'issue de l'étape 310.

Enfin, la phase d'inférence 300 comporte une étape de génération 330 d'une image $\widehat{HR}$ de haute résolution correspondant à une médiane des images prédites $\widehat{HR_n}$ obtenues à l'issue de l'étape 320. Cette médiane est calculée pixel par pixel. Grâce au calcul de la médiane, on obtient un modèle lissé qui est certifié dans un intervalle de percentiles qui dépend de la perturbation présente dans l'image d'entrée. En effet, une fonction lissée par percentiles $q_p$ avec une perturbation $\delta$ peut être bornée comme suit :

[Math.1]

$$\underline{q_p}(x) \leq q_p(x + \delta) \leq \overline{q_{\overline{p}}}(x), \forall \, \|\delta\|_2 < \varepsilon$$

de telle sorte que $\overline{p} = \Phi\left(\Phi^{-1}(p) + \frac{\varepsilon}{2}\right)$ et $\underline{p} = \Phi\left(\Phi^{-1}(p) - \frac{\varepsilon}{2}\right)$, avec $\Phi$ la fonction de distribution gaussienne standard (CDF pour « Cumulative Distribution Function »).

La valeur optimale de l'écart type $\sigma$ du bruit gaussien à utiliser pour la génération 310 des images bruitées $LR_n$ dépend du type de perturbation qui affecte les images en entrée. La valeur optimale d'écart type à utiliser peut notamment être prédéfinie en fonction d'une métrique de similarité perceptuelle d'image (LPIPS, telle que définie dans [8]) mesurée pour différentes images obtenues en sortie de la phase d'inférence 300 et pour différentes valeurs candidates d'écart type. A titre d'exemple nullement limitatif, la valeur d'écart type utilisé pour la génération 310 des images bruitées peut être comprise entre 0.005 et 0.1.

Il est avantageux d'utiliser un lissage par la médiane, et non pas par la moyenne comme c'est généralement le cas dans les méthodes de certification pour la tâche de classification. En effet, la médiane n'est quasiment pas affectée par les valeurs aberrantes pouvant être présentes dans les images de basse résolution $LR$. Contrairement à la médiane, la moyenne a tendance à lisser les régions où les prédictions sont localement constantes, ce qui est désavantageux pour les images dans la mesure où elles contiennent souvent des textures.

D'autre part, il apparaît que le lissage par la médiane est particulièrement bien adapté à la super-résolution d'image car les variations au niveau pixel dans les images prédites restent relativement faibles, et il est possible de contrôler cette instabilité par cette méthode de certification avec un nombre d'échantillons faible (significativement inférieur au nombre d'échantillons requis dans le domaine de la classification ou de la régression dans des tâches de détection d'objet). Ainsi, le nombre N d'images bruitées dont les prédictions sont utilisées pour la génération 330 de l'image médiane $\widehat{HR}$ pendant la phase d'inférence 300 peut rester relativement faible. A titre d'exemple nullement limitatif, N peut être compris entre 5 et 100, voire entre 10 et 50, voire entre 15 et 25.

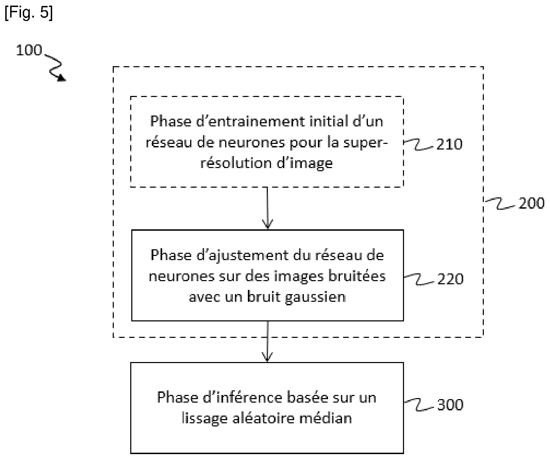

Tel qu'illustré sur la figure 5, si le réseau de neurones 13 utilisé est sensible au bruit gaussien, il est avantageux d'effectuer, lors de l'entrainement préalable 200 du réseau de neurones 13, une phase d'ajustement 220 (« fine-tuning » en anglais) qui succède à une phase d'entrainement initial 210. La phase d'ajustement 220 comprend elle aussi un lissage aléatoire médian. Dans ce cas, la phase d'ajustement 220 fait partie de l'invention, mais la phase d'entrainement initial 210 ne fait pas nécessairement partie de l'invention (en particulier la façon dont cette phase d'entrainement initial 210 est mise en oeuvre n'est pas essentielle à l'invention). Le nombre d'époques dans l'entrainement initial 210 est généralement beaucoup plus important que le nombre d'époques dans la phase d'ajustement 220 (le nombre d'époques est un hyperparamètre définissant le nombre de passages de l'algorithme d'apprentissage sur un jeu complet de données d'entrainement). Dans une variante, plutôt que de faire successivement un entrainement initial conventionnel puis un ajustement par lissage aléatoire médian, il est envisageable d'intégrer un lissage aléatoire médian tout au long de l'entrainement.

La phase d'ajustement 220 peut être mise en oeuvre par le dispositif 10 de traitement d'image décrit en référence à la figure 2. Rien n'empêcherait toutefois que la phase d'ajustement 220 et la phase d'inférence 300 soient mise en oeuvre chacune par un dispositif distinct.

La phase d'ajustement 220 est basée sur un jeu de données d'entrainement comportant un ensemble de paires d'images, chaque paire d'image comportant une version haute résolution et une version basse résolution d'une même image. Il peut s'agir du même jeu de données d'entrainement que celui utilisé pour l'entrainement initial 210 du réseau de neurones 13. Rien n'empêche toutefois de faire la phase d'ajustement 220 sur un jeu de données d'entrainement différent de celui utilisé pour la phase d'entrainement initial 210.

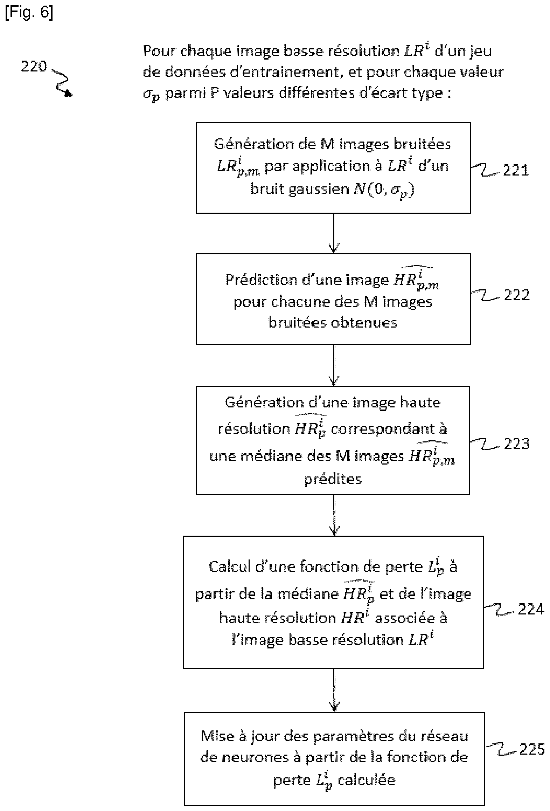

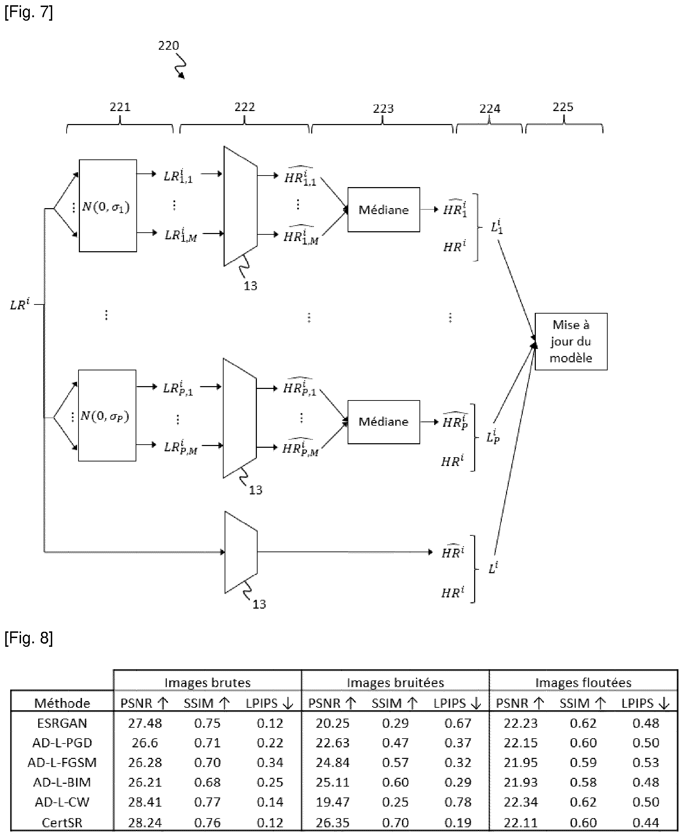

Les figures 6 et 7 représentent schématiquement les principales étapes de la phase d'ajustement 220 de la méthode 100 selon l'invention.

Pour chaque image basse résolution $LR^i$ du jeu de données d'entrainement de la phase d'ajustement 220, et pour chaque valeur $\sigma_p$ parmi un nombre P de valeurs d'écart type différentes, la phase d'ajustement 220 comporte les étapes suivantes.

La phase d'ajustement 220 comporte dans un premier temps une génération 221 de plusieurs images bruitées. Chaque image bruitée est obtenue par une application à l'image de basse résolution $LR^i$ d'un échantillon aléatoire de bruit gaussien $N(0, \sigma_p)$ présentant une moyenne nulle et un écart type $\sigma_p$ prédéfini. On note M le nombre d'images bruitées obtenues : $LR^i_{p,1}, LR^i_{p,2}, \ldots, LR^i_{p,m}, \ldots, LR^i_{p,M}$. Chaque image bruitée $LR^i_{p,m}$ correspond donc à l'addition, pixel par pixel, de l'image de basse résolution $LR^i$ avec un tirage aléatoire du bruit gaussien $N(0, \sigma_p)$. Là encore, il est envisageable de faire un seul tirage aléatoire indépendant et identiquement distribué par pixel et d'appliquer ce tirage à chacune des composantes R, G et B du pixel (un tirage par pixel), ou bien de faire un tirage aléatoire indépendant et identiquement distribué pour chacune des composantes R, G et B du pixel (trois tirages par pixel).

La phase d'ajustement 220 comporte ensuite une étape de prédiction 222, par le réseau de neurones 13, d'une image de haute résolution $\widehat{HR^i_{p,m}}$ pour chacune des images bruitées $LR^i_{p,m}$ obtenues à l'issue de l'étape 221.

La phase d'ajustement 220 comporte ensuite une étape de génération 223 d'une image de haute résolution $\widehat{HR^i_p}$ correspondant à une médiane des images prédites $\widehat{HR^i_{p,m}}$ obtenues à l'issue de l'étape 222. La médiane est calculée pixel par pixel.

La phase d'ajustement 220 comporte ensuite un calcul 224 d'une fonction de perte $L^i_p$ à partir de l'image médiane $\widehat{HR^i_p}$ et de l'image haute résolution $HR^i$ associée à l'image basse résolution $LR^i$.

La phase d'ajustement 220 comporte enfin une mise à jour 225 des paramètres (poids) du réseau de neurones 13 par une descente de gradient basée sur la fonction de perte $L^i_p$ calculée. Une fonction de perte $L^i_{tot}$ peut aussi être calculée pour chaque image $LR^i$ à partir des différentes valeurs $L^i_p$ ($L^i_{tot}$ correspond par exemple à la somme des $L^i_p$).

Comme illustré sur la figure 7, une fonction de perte $L^i$ calculée pour une prédiction $\widehat{HR^i}$ de l'image $LR^i$ par le réseau de neurones 13 peut également être prise en compte pour la mise à jour 225 des paramètres.

La fonction de perte peut avantageusement comporter une composante $L_{pix}$ relative à une perte au niveau pixel et une composante $L_{perc}$ relative à une perte au niveau d'une similarité perceptuelle d'image. Lorsque le modèle utilisé est basé sur un réseau génératif antagoniste, la fonction de perte peut également comporter une composante $L_{adv}$ relative à une perte adverse. La fonction de perte totale $L_{tot}$ est par exemple égale à la somme (ou à une combinaison linéaire) de ces trois composantes :

$$L_{tot} = L_{pix} + L_{perc} + L_{adv}.$$

Pour la phase d'ajustement 220, on peut choisir des valeurs relativement faibles pour le nombre P de valeurs différentes d'écart type à utiliser et le nombre M d'images bruitées à considérer. On peut par exemple choisir P = 2 et M = 2.

Si M = 2 la médiane est équivalente à la moyenne. En pratique, il peut être avantageux d'exploiter la médiane plutôt que la moyenne, notamment si des anomalies peuvent être présentes dans les valeurs des pixels des images. Dans ce cas il est préférable de prendre M > 2.

Il convient de noter que rien n'oblige à ce que le nombre d'images bruitées générées pour une valeur donnée d'écart type soit identique pour toutes les valeurs d'écart type considérées. Autrement dit, on peut avoir un nombre $M_p$ d'images bruitées à partir de la valeur $\sigma_p$ qui varie avec l'indice p.

A titre d'exemple nullement limitatif, on peut choisir une première valeur d'écart type $\sigma_1$ comprise entre 0.01 et 0.06 et une deuxième valeur d'écart type $\sigma_2$ comprise entre 0.1 et 0.6.

_Attaques adverses et apprentissage adverse :_

Dans la suite, nous allons considérer différents types d'attaques adverses pour vérifier la robustesse de la méthode 100 de super-résolution d'image selon l'invention. Ces attaques adverses prennent en compte à la fois une perte au niveau des pixels et une perte au niveau de la similarité perceptuelle d'image. Différents types de bruit présent dans les images du monde réel seront également considérés. Plus particulièrement, quatre types d'attaques adverses (FGSM, BIM, PGD et CW) et deux types de bruit particuliers (un bruit gaussien semblable à un bruit de capteur, et un floutage modélisé par convolution avec un noyau gaussien) seront considérés.

Il a été prouvé que les modèles de prédiction basés sur des réseaux de neurones sont sensibles aux attaques adverses (aussi connues sous les expressions « attaques par exemples contradictoires » ou « « attaques par exemples adverses », en anglais « adversarial examples attack »).

Une attaque adverse peut être représentée de la façon suivante : à partir d'une donnée d'entrée x, un exemple adverse de x prend la forme x' = x + δ, avec δ une perturbation de valeur faible devant x. Cela signifie que x' est légèrement différent de x, mais une prédiction de x' par un modèle donné peut différer significativement de la prédiction de x. Les éléments x et δ appartiennent par exemple à l'ensemble $[0,1]^n$. Dans l'exemple considéré, x est une image, c'est-à-dire un ensemble de pixels, et chaque pixel peut prendre une valeur normalisée comprise entre 0 et 1.

Plusieurs méthodes ont été proposées pour générer des exemples adverses dans le but de tromper un modèle de prédiction. Ces méthodes sont cependant relativement peu étudiées dans le domaine de la résolution d'image.

Pour créer des exemples adverses, il convient de rechercher la perturbation la plus efficace à apporter à une donnée d'entrée $x$ pour tromper le modèle considéré. La perturbation $\delta$ est déterminée pour ne pas modifier un pixel de l'image d'entrée d'une valeur supérieur à un paramètre $\varepsilon$. La perturbation est donc recherchée dans une boule $B_p(x, \varepsilon)$ centrée sur $x$ et de rayon $\varepsilon$. La boule $B_p$ est définie relativement à une norme $l_p$. Pour les attaques adverses de type FGSM, BIM et PGD, la norme $l_\infty$ est considérée. Pour l'attaque adverse de type CW, la norme $l_2$ est considérée. Ces attaques adverses sont plus efficaces sur ces normes.

Pour l'attaque adverse de type FGSM (acronyme anglais de « Fast Gradient Sign Method », en français « méthode rapide du signe du gradient »), le signe du gradient de la fonction de perte par rapport à la donnée d'entrée est utilisé pour déterminer la façon dont chaque pixel de la donnée d'entrée doit être modifié pour obtenir la perturbation la plus efficace. Mathématiquement, l'exemple adverse $x'$ peut s'écrire :

[Math.2]

$$x' = x + \varepsilon \cdot sign(\nabla_x L(f_\theta(x), y))$$

Dans cette expression, L est la fonction de perte (comprenant à la fois la perte au niveau pixel et la perte de similarité perceptuelle), $x$ est la donnée d'entrée (image de basse résolution), $y$ est l'image de haute résolution associée à l'image de basse résolution (vérité de terrain ou « ground truth » en anglais), $f_\theta : [0,1]^n \rightarrow [0,1]^m$ est la fonction correspondant au réseau de neurones considéré, $f_\theta(x)$ correspond donc à la prédiction de $x$ par le réseau de neurones, et $\nabla_x$ est la fonction de gradient par rapport à la donnée d'entrée $x$. Plus la valeur du paramètre $\varepsilon$ augmente, et plus il devient facile de dégrader les performances du modèle de prédiction.

L'attaque adverse de type BIM (acronyme anglais de « Basic itérative Method », en français « méthode basique itérative ») est une extension de l'attaque adverse de type FGSM. L'attaque de type BIM consiste à exécuter itérativement l'attaque FGSM pour un nombre $T$ d'itérations, avec une taille de pas $\alpha = \frac{\varepsilon}{T}$ :

[Math.3]

$$x_T = x_{T-1} + \alpha \cdot sign(\nabla_{x_{T-1}} L(f_\theta(x_{T-1}), y)$$

Dans cette expression, $x_T$ représente un exemple obtenu après $T$ itérations ; $x_0 = x$ est la donnée d'entrée.

L'attaque adverse de type PGD (acronyme anglais de « Projected Gradient Descent », en français « projection du gradient de descente ») peut être considérée comme une généralisation de l'attaque adverse de type BIM, pour laquelle la condition $\alpha = \frac{\varepsilon}{T}$ n'est pas requise. En outre, l'initialisation de $x_0$ est basée sur une perturbation de $x$ selon une distribution uniforme dans l'intervalle $[-\varepsilon, \varepsilon]$ (distribution uniforme $U(-\varepsilon, \varepsilon)$). Mathématiquement, cela peut se traduire par :

[Math.4]

$$x_0 = x + u, u \sim U(-\varepsilon, \varepsilon)$$
$$x_T = clip_{x,\varepsilon}(x_{T-1} + \alpha \cdot sign(\nabla_{x_{T-1}} L(f_\theta(x_{T-1}), y)))$$

Dans cette expression, la fonction $clip_{x,\varepsilon}$ correspond à un écrêtage des valeurs d'exemple adverse pour qu'elles se situent à l'intérieur d'un voisinage $\varepsilon$ de la donnée d'origine $x$.

Dans une attaque adverse de type CW (nommée ainsi d'après les initiales de ses auteurs, Carlini et Wagner) la perturbation n'est pas contrainte par la boule $B_p(x, \varepsilon)$ selon la norme infinie $l_\infty$, mais elle vise à être minimale pour la norme $l_2$. L'objectif de cette attaque est de maximiser la fonction de perte en attaquant les images avec la perturbation optimale. Il s'agit d'un problème d'optimisation défini par l'expression suivante :

[Math.5]

$$\min_\delta(\|\delta\|_2 - c \cdot L(f_\theta(x), y)), tel\ que\ x + \delta \in [0,1]^n$$

Dans cette expression, $\|\delta\|_2$ représente la norme $l_2$ de la perturbation $\delta$, et $c$ est un hyperparamètre de compromis relativement à la norme $l_2$ de la perturbation. Pour s'assurer que $x + \delta \in [0,1]^n$, on peut introduire un paramètre w et

déterminer $\delta$ comme suit :

[Math.6]

$$\delta = \frac{1}{2}(\tanh(w) + 1) - x$$

Il existe principalement deux solutions pour renforcer les réseaux de neurones contre les attaques adverses. Une première solution repose sur l'utilisation de méthodes de régularisation pour éviter l'expansion de bruit à travers le réseau de neurones. Une deuxième solution, la plus utilisée, repose sur l'apprentissage adverse. L'apprentissage adverse consiste à générer des exemples adverses à partir des données du jeu d'entrainement et à entraîner le modèle sur les exemples adverses générés pour améliorer la robustesse du modèle.

L'objectif d'une méthode classique d'apprentissage est de trouver, parmi l'ensemble $\Theta$ de tous les paramètres $\theta$ possibles du modèle considéré, les paramètres optimaux $\theta$* qui minimisent une fonction de perte totale correspondant à la moyenne des fonctions de perte individuelles $L(f_\theta(x),y;\theta)$ pour chacune des $N$ paires $(x, y)$ du jeu d'entrainement D. Cela peut se traduire par l'expression suivante :

[Math.7]

$$\theta^* = \underset{\theta \in \Theta}{\operatorname{argmin}}\left(\frac{1}{N}\sum_{(x^{(i)},y^{(i)}) \in D} L\big(f_\theta(x^{(i)}), y^{(i)}; \theta\big)\right)$$

L'apprentissage adverse consiste à apprendre sur des exemples adverses générés à partir d'une perturbation $\delta$. L'apprentissage adverse est généralement présenté sous la forme d'un problème d'optimisation min-max robuste du type :

[Math.8]

$$\theta^*_{adv} = \underset{\theta \in \Theta}{\operatorname{argmin}}\left(\frac{1}{N}\sum_{(x^{(i)},y^{(i)}) \in D} \underset{\|\delta\|<\varepsilon}{\operatorname{argmax}}\Big(L\big(f_\theta(x^{(i)} + \delta), y^{(i)}; \theta\big)\Big)\right)$$

L'entrainement du modèle sur les exemples adverses est généralement traité à l'aide d'un algorithme d'optimisation basé sur la descente de gradient sur des minilots. A chaque itération du processus d'optimisation, les paramètres du réseau neuronal sont mis à jour et il est nécessaire de calculer les perturbations adverses par rapport à ces nouveaux paramètres pour chaque nouvelle itération. Cette étape représente donc un temps de calcul supplémentaire significatif par rapport à l'apprentissage classique. En outre, et comme indiqué précédemment, l'apprentissage adverse présente l'inconvénient de protéger un modèle de façon efficace uniquement contre le type d'attaque adverse utilisé pour générer les exemples adverses exploités pendant l'apprentissage adverse.

Résultats expérimentaux :

Pour illustrer les performances de la méthode 100 de super-résolution d'image selon l'invention, différentes méthodes de super-résolution d'images ont été testées et comparées. Ces méthodes sont basées sur le modèle ESRGAN décrit dans le document [3]. Comme indiqué précédemment, le modèle ESRGAN est un réseau de neurones antagoniste génératif utilisé pour la super-résolution d'image. La résolution d'une image générée par le modèle est augmentée d'un facteur quatre par rapport à l'image fournie en entrée du modèle. Le modèle ESRGAN est préalablement entrainé sur un jeu de données d'entrainement comportant les 2650 images de résolution 2K de l'ensemble d'images Flickr2K et les images basse résolution associées générées par sous-échantillonnage bicubique.

Les différentes méthodes qui ont été testées sont chacune basée sur une phase d'ajustement différente. L'ajustement est basé sur un jeu d'images issues de l'ensemble DIV2K (le jeu d'images DIV2K comporte 800 images de résolution 2K). Pour la méthode 100 selon l'invention, la phase d'ajustement 220 précédemment décrite en référence aux figures 6 et 7 et la phase d'inférence 300 précédemment décrite en référence aux figures 3 et 4 ont été utilisées. Ce premier exemple de mise en oeuvre de la méthode selon l'invention est nommé « CertSR » dans les tableaux des figures 8 à 10. Les autres méthodes testées correspondent simplement à une prédiction d'image à l'aide respectivement :

- du modèle ESRGAN optimisé par une phase d'ajustement sur le jeu d'images issues de l'ensemble DIV2K (méthode nommée « ESRGAN » dans les tableaux des figures 8 à 10),
- du modèle ESRGAN optimisé par une phase d'ajustement adverse de type PGD (il s'agit du modèle décrit dans le document [4], la méthode associée est nommée « AD-L-PGD » dans les tableaux des figures 8 à 10),
- du modèle ESRGAN optimisé par une phase d'ajustement adverse de type FGSM (méthode nommée « AD-L-FGSM » dans les tableaux des figures 8 à 10),
- du modèle ESRGAN optimisé par une phase d'ajustement adverse de type BIM (méthode nommée « AD-L-BIM » dans les tableaux des figures 8 à 10),
- du modèle ESRGAN optimisé par une phase d'ajustement adverse de type CW (méthode nommée « AD-L-CW » dans les tableaux des figures 8 à 10).

Pour chacune des phases d'ajustement adverse FGSM, BIM et CW, des exemples adverses sont créés à partir des images de l'ensemble DIV2K et un entrainement adverse est mené sur les images attaquées. Il convient de noter que, à la connaissance des inventeurs, avant les travaux décrits dans la présente demande, il n'existait pas de modèles de super-résolution d'image optimisés contre les attaques adverses de type FGSM, BIM et CW basés sur une fonction de perte comprenant à la fois une perte au niveau pixel et une perte au niveau de la similarité perceptuelle.

Seule la phase d'ajustement 220 selon l'invention pour le modèle CertSR est basée sur une certification par un lissage aléatoire médian. Les phases d'ajustement adverses des modèles AD-L-PGD, AD-L-FGSM, AD-L-BIM et AD-L-CW correspondent à des phases d'entrainement adverse telles que précédemment décrites (entrainement sur des exemples adverses générés à partir du jeu d'ajustement).

Pour les différentes phase d'ajustement mentionnées ci-dessus, les images DIV2K sont recadrées en sous images de taille $480 \times 480$ ; une optimisation Adam est utilisée avec $\beta_1 = 0.9$ et $\beta_2 = 0.999$ ($\beta_1$, respectivement $\beta_2$, est un hyperparamètre définissant le taux de décroissance exponentiel pour les estimations du premier moment, respectivement du second moment) et un taux initial d'apprentissage de $10^{-4}$ pour le générateur et le discriminateur ; pour les ajustements adverses, 18k itérations sont effectuées avec 16 images par lot ; pour les ajustements adverses de type FGSM et BIM, le paramètre $\varepsilon = 9/255$ est utilisé, et $T = 2$ itérations pour BIM ; pour l'ajustement adverse de type CW, les paramètres $c = 10^{-2}$ et $T = 4$ itérations sont utilisés. Pour la phase d'ajustement 220 selon l'invention (phase d'ajustement avec lissage aléatoire médian) 59k itérations sont effectuées avec 5 images par lot ($P = 2$ ; $M = 2$ ; $\sigma_1 = 0.03$ ; $\sigma_2 = 0.2$).

Le jeu de données de validation de DIV2K est utilisé pour comparer les performances de la phase d'inférence des différentes méthodes testées (le jeu de validation de DIV2K comporte 100 images de basse résolution et leurs images de haute résolution associées). Des tests sont menés respectivement :

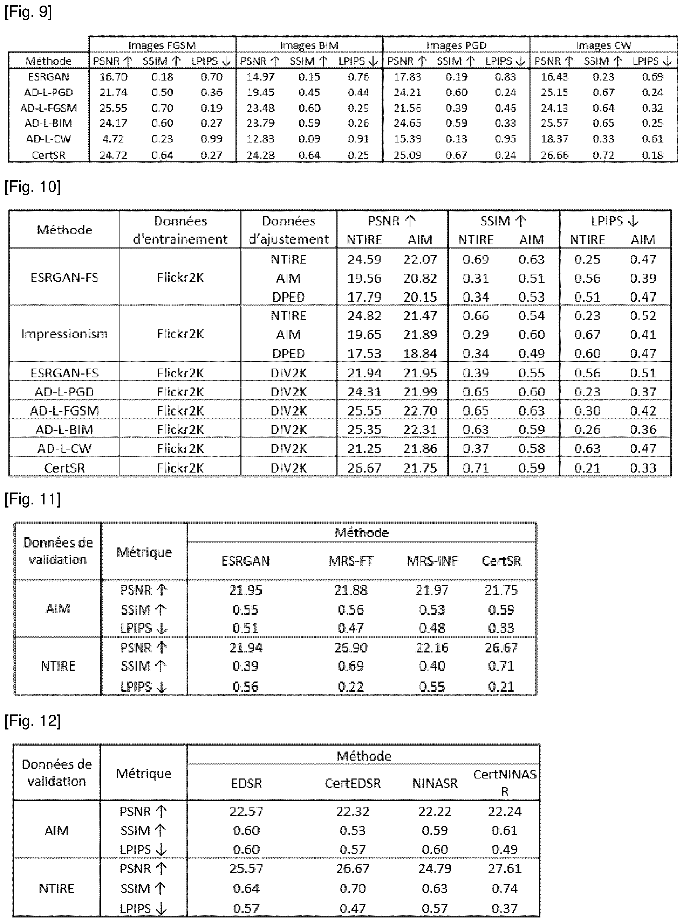

- directement sur les images du jeu de validation de DIV2K (« Images brutes » dans le tableau de la figure 8),
- sur les images du jeu de validation de DIV2K auxquelles est ajouté un bruit gaussien simulant un bruit de capteur, à savoir un bruit gaussien indépendant au niveau pixel avec une moyenne nulle et un écart type de 0.03 (« Images bruitées » dans le tableau de la figure 8),
- sur les images du jeu de validation de DIV2K modifiées par lissage par un noyau gaussien de taille 10 et d'écart type 0.3 (« Images floutées » dans le tableau de la figure 8),
- sur les images du jeu de validation de DIV2K attaquées avec une attaque adverse de type FGSM (« Images FGSM » dans le tableau de la figure 9),
- sur les images du jeu de validation de DIV2K attaquées avec une attaque adverse de type BIM (« Images BIM » dans le tableau de la figure 9),
- sur les images du jeu de validation de DIV2K attaquées avec une attaque adverse de type PGD (« Images PGD » dans le tableau de la figure 9),
- sur les images du jeu de validation de DIV2K attaquées avec une attaque adverse de type CW (« Images CW » dans le tableau de la figure 9).

Trois métriques ont été utilisées pour comparer les performances des différentes méthodes testées. La première métrique, PSNR (« Peak Signal to Noise Ratio », en français « rapport de signal crête sur bruit »), est décrite dans le document [6]. La deuxième métrique, SSIM (« Structural Similarity Index Measure », en français « mesure de l'indice de similarité structurelle ») est décrite dans le document [7]. La troisième métrique, LPIPS (« Learned Perceptual Image Patch Similarity », en français « Similarité perceptuelle d'image apprise »), est décrite dans le document [8]. Les métriques PSNR et SSIM sont abondamment utilisées pour évaluer la restauration d'image. Ces métriques privilégient la fidélité de l'image plutôt que la qualité visuelle. Une valeur plus grande de PSNR ou de SSIM indique une meilleure fidélité de l'image prédite par rapport à la vérité terrain (c'est indiqué par la flèche dirigée vers le haut à côté des termes « PSNR » ou « SSIM » dans les tableaux). En revanche, la métrique LPIPS accorde plus d'importance à l'évaluation de la similitude des caractéristiques visuelles entre les images. Une valeur plus faible de LPIPS indique une plus grande similitude perceptuelle entre l'image prédite et la vérité terrain (c'est indiqué par la flèche dirigée vers le bas à côté du terme « LPIPS » dans les tableaux).

Comme on l'a vu précédemment, la valeur optimale d'écart type $\sigma$ à utiliser pour le bruit gaussien pendant de la phase d'inférence 300 par lissage aléatoire médian dépend du type de perturbation qui affecte les images en entrée. Pour les résultats présentés dans les tableaux des figures 8 et 9, $\sigma$ = 0.05 pour les images floutées, $\sigma$ = 0.06 pour les images attaquées avec FGSM et PGD, $\sigma$ = 0.07 pour les images attaquées avec BIM, et $\sigma$ = 0.03 pour les images attaquées avec CW (ces valeurs sont celles fournissant les meilleurs résultats pour la métrique LPIPS).

Pour la phase d'inférence 300 par lissage aléatoire médian avec le modèle CertSR, le nombre N d'images bruitées dont les prédictions sont utilisées pour la génération 330 de l'image médiane est choisi égal à vingt-et-un ($N$ = 21). Il est à noter que, pour les images brutes et les images bruitées, la phase d'inférence 300 par lissage aléatoire médian n'est pas indispensable car la phase d'ajustement 220 a permis d'entrainer le modèle à la fois sur des images brutes et des images bruitées.

Les résultats présentés dans les tableaux des figures 8 et 9 montrent que la méthode 100 selon l'invention (CertSR) présente de très bonnes performances sur l'ensemble des jeux de validation considérés. En particulier, la méthode 100 selon l'invention prend la première place en termes de LPIPS pour tous les jeux de validation, à l'exception du jeu de validation « images FGSM » pour lequel elle prend la deuxième place. En termes de PSNR et SSIM, elle prend la première place pour les jeux de validation « images bruitées », « images BIM », « images PGD » et « images CW », et elle prend la deuxième place pour les jeux de validation « images brutes » et « images FGSM ». Il apparaît ainsi que la méthode 100 selon l'invention est la méthode la plus robuste, de façon universelle, contre les attaques adverses (et il est important de rappeler que cette méthode ne comporte pas d'entrainement adverse ou d'ajustement par entrainement adverse). Ces résultats montrent également qu'un modèle spécifiquement entrainé contre une attaque adverse particulière reste vulnérable contre des attaques adverses d'un autre type (et il peut aussi rester relativement sensible à l'attaque adverse pour laquelle il a été entrainé).

Tel qu'illustré sur la figure 10, la méthode 100 selon l'invention (CertSR) a également été comparée avec deux des modèles les plus performants sur les jeux de validation NTIRE 2020 et AIM 2019, à savoir le modèle « Impressionism » décrit dans le document [1] et « ESRGAN-FS » décrit dans le document [2]. Ces deux modèles ont été pré-entrainés sur le jeu d'images Flickr2K, puis affiné respectivement sur les jeux d'images NTIRE, AIM et DPED. Les jeux d'images NTIRE et AIM correspondent à des images du monde réel avec différents types de corruptions synthétiques et de bruit de capteur dans les images de basse résolution.

Les résultats présentés dans le tableau de la figure 10 montrent que la méthode 100 selon l'invention présente les meilleures performances en termes de LPIPS sur les jeux de validation NTIRE et AIM (et il est important de rappeler que cette méthode ne comporte pas d'entrainement spécifique sur ces images). Elle présente également les meilleures performances en termes de PSNR et SSIM sur le jeu de validation NTIRE. Pour obtenir les résultats présentés à la figure 10, une valeur d'écart type $\sigma$ = 0.03 a été utilisée pour la phase d'inférence 300 de la méthode CertSR

Ainsi, la méthode 100 selon l'invention, basée sur une phase d'inférence avec lissage aléatoire médian, est la méthode la plus robuste, de façon universelle, aussi bien contre les attaques adverses et contre des bruits naturels qui n'ont pas nécessairement été observés pendant l'entrainement.

Le premier exemple de mise en oeuvre de la méthode selon l'invention (CertSR) présenté ci-avant comprend à la fois une phase d'ajustement 220 et une phase d'inférence basées sur un lissage aléatoire médian (MRS).

Il convient toutefois de noter que le seul fait d'affiner l'entrainement d'un réseau de neurones pour la super-résolution d'image à l'aide d'une phase d'ajustement basée sur un lissage aléatoire médian (telle que la phase d'ajustement 220 décrite en référence aux figures 6 et 7) peut suffire à améliorer les performances du réseau de neurones (sans nécessairement avoir recours à un lissage aléatoire médian au moment de l'inférence).

Aussi, le simple fait de mettre en oeuvre une phase d'inférence basée sur lissage aléatoire médian (telle que la phase d'inférence 300 décrite en référence aux figures 3 et 4) peut suffire à améliorer les performances du réseau de neurones (sans nécessairement avoir recours à une phase d'ajustement par lissage aléatoire médian pendant l'entrainement du réseau de neurones).

La tableau de la figure 11 illustre cela en comparant les performances de CertSR avec deux autres exemples de mise en oeuvre de l'invention basés sur ESRGAN. Dans ce tableau, « MRS-FT » correspond à un exemple de mise en oeuvre de l'invention basée sur ESRGAN avec une phase d'ajustement 220 par lissage aléatoire médian identique à celle utilisée pour CertSR, mais sans utiliser de lissage aléatoire médian au moment de l'inférence. « MRS-INF » correspond à un exemple de mise en oeuvre de l'invention basée sur ESRGAN avec une phase d'inférence par lissage aléatoire médian identique à celle utilisée pour CertSR, mais sans avoir préalablement effectué une phase d'ajustement par lissage aléatoire médian.

Il apparait dans le tableau de la figure 11 que les méthodes MRS-FT et MRS-INF améliorent toutes les deux les performances du modèle ESRGAN en termes de LPIPS, aussi bien sur le jeu de validation AIM que sur le jeu de validation NTIRE. Il apparait toutefois (et de façon significative) que CertSR reste la méthode la plus performante.

Les résultats présentés dans le tableau de la figure 12 illustrent que la méthode selon l'invention peut s'appliquer à différents types de réseaux de neurones, et pas uniquement à des réseaux de neurones de type GAN. Dans ce tableau, EDSR correspond au réseau de neurones décrit dans le document [9] ; NINASR correspond au réseau de neurones décrit dans [10] ; CertEDSR (respectivement CertNINASR) correspond à un exemple de mise en oeuvre de l'invention basé sur EDSR (respectivement NINASR) et comportant à la fois une phase d'ajustement 220 et une phase d'inférence 300 basées sur un lissage aléatoire médian.

Il apparait dans les résultats présentés par le tableau de la figure 12 que la méthode CertEDSR (respectivement CertNINASR) améliore significativement les performances du modèle EDSR (respectivement NINASR) en termes de LPIPS, aussi bien sur le jeu de validation AIM que sur le jeu de validation NTIRE.

Pour la phase d'affinage 220 de CertEDSR et CertNINASR, les mêmes paramètres sont utilisés que pour CertSR ($P = 2$ ; $M = 2$ ; $\sigma_1 = 0.03$ ; $\sigma_2 = 0.2$). Pour la phase d'inférence 300 de CertEDSR et CertNINASR, $N = 11$, $\sigma = 0.1$ pour AIM et $\sigma = 0.005$ pour NTIRE.

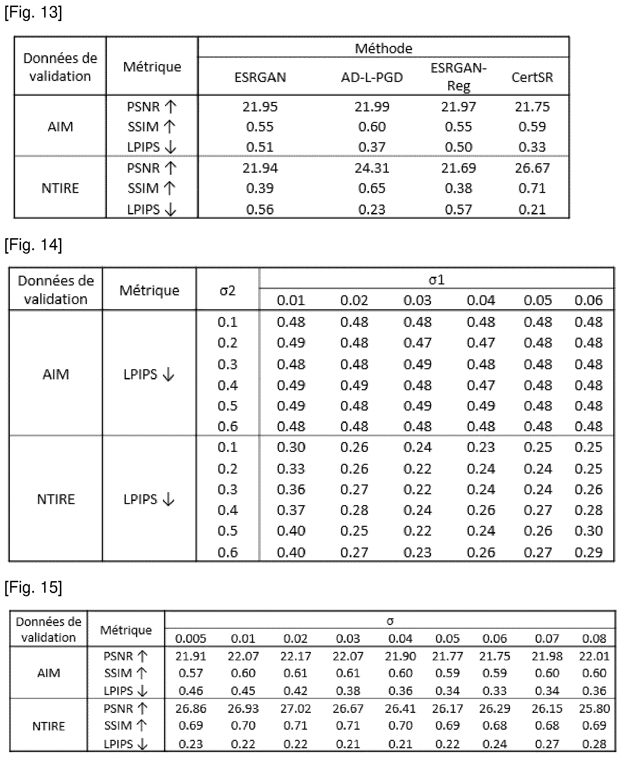

Le tableau de la figure 13 compare les performances des méthodes CertSR, ESRGAN et AD-L-PGD avec une méthode basée sur une régularisation de ESRGAN (cette méthode est nommée « ESRGAN-Reg », elle est basée sur une méthode de régularisation similaire à celle décrite par le document [11]).

Il apparait dans les résultats présentés par le tableau de la figure 13 que CertSR fournit de meilleures performances que ESRGAN-Reg, notamment en termes de LPIPS.

Le tableau de la figure 14 montre l'impact, en termes de LPIPS, des hyperparamètres $\sigma_1$ et $\sigma_2$ utilisés pour la phase d'ajustement 220 de CertSR sur les jeux de validation AIM et NTIRE. Il apparaît que les valeurs $\sigma_1 = 0.03$ et $\sigma_2 = 0.2$ donnent les meilleurs résultats à la fois pour AIM et pour NTIRE.

Le tableau de la figure 15 montre l'impact, en termes de PSNR, SSIM et LPIPS, de l'hyperparamètre $\sigma$ utilisé pour la phase d'inférence 300 de CertSR sur les jeux de validation AIM et NTIRE. Il apparait que la valeur $\sigma = 0.03$ donne les meilleurs résultats en termes de LPIPS à la fois pour AIM et pour NTIRE.

La description ci-avant illustre clairement que, par ses différentes caractéristiques et leurs avantages, la présente invention atteint les objectifs fixés. En particulier, la méthode de super-résolution proposée est robuste de façon universelle devant une grande variété de perturbations (bruits ou attaques adverses).

L'utilisation d'un lissage aléatoire médian pendant la phase d'inférence est particulièrement bien adapté au cas de la super-résolution d'image car les variations au niveau pixel dans les images prédites restent relativement faibles, et il est par conséquent possible d'utiliser un nombre N d'échantillons faible. Ainsi, la méthode selon l'invention est particulièrement peu coûteuse en termes de puissance de calcul, contrairement aux méthodes basées sur un ajustement par entrainement adverse.

Il convient de noter que les modes de mise en oeuvre et de réalisation considérés ci-dessus ont été décrits à titre d'exemples non limitatifs, et que d'autres variantes sont par conséquent envisageables. En particulier, la méthode proposée de certification par lissage aléatoire médian peut s'appliquer à différents types de réseaux de neurones pour la super-résolution (et pas uniquement à un réseau de neurones de type GAN).

Il est également envisageable, pendant l'entrainement du réseau de neurones, d'effectuer à la fois une phase d'ajustement par lissage aléatoire médian et une phase d'ajustement adverse (par exemple un ajustement adverse de type BIM, FGSM, PGD ou CW). En particulier, les inventeurs ont observé que CertSR a tendance à lisser un peu trop les détails, alors qu'au contraire AD-L-BIM a tendance à trop les exagérer. Le fait de combiner une phase d'ajustement par lissage aléatoire médian et une phase adverse de type BIM peut avantageusement permettre d'atteindre un compromis satisfaisant sur cet aspect.

Références :

[1] « Real-world super-resolution via kernel estimation and noise injection », Xiaozhong Ji et al., Proceedings of the IEEE/CVF conférence on computer vision and pattern recognition workshops, 2020 ;

[2] « Frequency séparation for real-world super-resolution », Manuel Fritsche et al., Proceedings of the IEEE/CVF, International Conférence on Computer Vision Workshop (ICCV), 2019 ;

[3] « ESRGAN : Enhanced Super-Resolution Generative Adversarial Networks », Xintao Wang et al., Proceedings of the European conférence on computer vision (ECCV) workshops, 2018 ;

[4] « Generalized real-world super-resolution through adversarial robustness », Angela Castillo et al., Proceedings of the IEEE/CVF, International Conférence on Computer Vision (ICCV) Workshops, pages 1855-1865, 2021 ;

[5] « Détection as régression : Certified object détection with médian smoothing », Ping-Yeh Chiang et al., Advances in Neural Information Processing Systems, pages 1275-1286, 2020 ;

[6] « Single image super-resolution : A benchmark », Chih-Yuan Yang et al., European Conference on Computer Vision (ECCV), pages 372-386, 2014 ;

[7] « Image quality assessment : from error visibility to structural similarity », Wang Zhou et al., IEEE transactions on image processing, pages 600-612, 2004 ;

[8] « The unreasonable effectiveness of deep features as perceptual metric », Richard Zhang et al., Proceedings of the IEEE conférence on computer vision and pattern recognition, pages 586-595, 2018 ;

[9] « Enhanced deep residual networks for single image super-resolution », Bee Lim et al., Proceedings of the IEE conference on computer vision and pattern recognition workshops, pages 136-144, 2017 ;

[10] « torchSR : A pytorch-based framework for single image super-resolution », Gabriel Gouvine, https://github.com/Coloquinte/torchSR/blob/main/doc/NinaSR.md, 2023 ;

[11] « Adversarially robust deep image super-resolution using entropy regularization », Jun-Ho Choi et al, Proceedings of the Asian Conférence on Computer Vision, 2020.

**Revendications**

1. Méthode (100) pour la super-résolution d'image, ladite méthode (100) étant mise en oeuvre par un dispositif (10) de traitement d'image mémorisant un réseau de neurones (13) préalablement entrainé à produire une image de haute résolution à partir d'une image de basse résolution, ladite méthode (100) étant **caractérisée en ce qu'**elle comporte une phase d'inférence (300) comportant :

   - une génération (310) d'une pluralité d'images bruitées à partir d'une image de basse résolution, chaque image bruitée étant obtenue par une application aléatoire à l'image de basse résolution d'un bruit gaussien présentant un écart type prédéfini,
   - une prédiction (320), par le réseau de neurones préalablement entrainé, d'une image pour chacune des images bruitées ainsi obtenues,
   - une génération (330) d'une image de haute résolution correspondant à une médiane des images prédites ainsi obtenues.

2. Méthode (100) selon la revendication 1 dans laquelle l'entrainement préalable du réseau de neurones (13) comporte une phase d'ajustement (220) basée sur un jeu de données d'entrainement comportant un ensemble de paires d'images, chaque paire d'image comportant une version haute résolution et une version basse résolution d'une même image, ladite phase d'ajustement (220) comportant, pour chaque image basse résolution du jeu de données d'entrainement, et pour chacune d'une pluralité de valeurs différentes d'écart type :

   - une génération (221) d'une pluralité d'images bruitées, chaque image bruitée étant obtenue par une application aléatoire à l'image de basse résolution considérée d'un bruit gaussien présentant un écart type égal à la valeur d'écart type considéré,
   - une prédiction (222) par le réseau de neurones d'une image de haute résolution pour chacune des images bruitées ainsi générées,
   - une génération (223) d'une image de haute résolution correspondant à une médiane des images prédites ainsi obtenues,
   - un calcul (224) d'une fonction de perte à partir de la médiane ainsi générée et de l'image haute résolution associée à l'image basse résolution considérée,
   - une mise à jour (225) de paramètres du réseau de neurones par une descente de gradient basée sur la fonction de perte.

3. Méthode (100) selon la revendication 2 dans laquelle la fonction de perte comporte une composante relative à une perte au niveau pixel et une composante relative à une perte au niveau d'une similarité perceptuelle d'image.

4. Méthode (100) selon l'une quelconque des revendications 1 à 3 dans laquelle la valeur de l'écart type du bruit gaussien à utiliser pour la génération (310) de la pluralité d'images bruitées pendant la phase d'inférence (300) est prédéfinie en fonction d'une métrique de similarité perceptuelle d'image mesurée pour différentes images obtenues en sortie de la phase d'inférence (300) et pour différentes valeurs candidates d'écart type.

5. Méthode (100) selon l'une quelconque des revendications 1 à 4 dans laquelle la valeur de l'écart type du bruit gaussien utilisé pour la génération (310) de la pluralité d'images bruitées est comprise entre 0.005 et 0.1.

6. Méthode (100) selon l'une quelconque des revendications 1 à 5 dans laquelle le nombre d'images bruitées dont les prédictions sont utilisées pour la génération (330) de la médiane pendant la phase d'inférence (300) est compris entre 5 et 100, voire entre 10 et 50, voire entre 15 et 25.

**7.** Méthode (100) selon l'une quelconque des revendications 1 à 6 dans laquelle deux valeurs différentes d'écart type sont utilisées pendant la phase d'ajustement (220).

**8.** Méthode (100) selon la revendication 7 dans laquelle les deux valeurs différentes d'écart type utilisées pendant la phase d'ajustement (220) comportent une première valeur d'écart type comprise entre 0.01 et 0.06 et une deuxième valeur d'écart type comprise entre 0.1 et 0.6.

**9.** Méthode (100) selon l'une quelconque des revendications 1 à 8 dans laquelle le nombre d'images bruitées dont les prédictions sont utilisées pour la génération (223) d'une médiane pendant la phase d'ajustement (220) est compris entre 2 et 8.

**10.** Méthode (100) selon l'une quelconque des revendications 1 à 9 dans laquelle le réseau de neurones (13) est un réseau antagoniste génératif.

**11.** Méthode (100) selon la revendication 10 dans laquelle le réseau de neurones (13) est basé sur le modèle ESRGAN.

**12.** Méthode (100) selon l'une quelconque des revendications 1 à 11 dans laquelle l'entrainement préalable du réseau de neurones (13) comporte une phase d'entrainent adverse de type BIM, FGSM, PGD ou CW.

**13.** Méthode d'entrainement (200) d'un réseau de neurones (13) pour la super-résolution d'image, ladite méthode d'entrainement (200) comportant une phase d'ajustement (220) basée sur un jeu de données d'entrainement comportant un ensemble de paires d'images, chaque paire d'image comportant une version haute résolution et une version basse résolution d'une même image, ladite phase d'ajustement (220) comportant, pour chaque image basse résolution du jeu de données d'entrainement, et pour chacune d'une pluralité de valeurs différentes d'écart type :

    - une génération (221) d'une pluralité d'images bruitées, chaque image bruitée étant obtenue par une application aléatoire à l'image de basse résolution considérée d'un bruit gaussien présentant un écart type égal à la valeur d'écart type considéré,
    - une prédiction (222) par le réseau de neurones d'une image de haute résolution pour chacune des images bruitées ainsi générées,
    - une génération (223) d'une image de haute résolution correspondant à une médiane des images prédites ainsi obtenues,
    - un calcul (224) d'une fonction de perte à partir de la médiane ainsi générée et de l'image haute résolution associée à l'image basse résolution considérée,
    - une mise à jour (225) de paramètres du réseau de neurones par une descente de gradient basée sur la fonction de perte.

**14.** Dispositif (10) de traitement d'image pour la super-résolution d'image, le dispositif (10) comporte une mémoire (12) mémorisant un réseau de neurones (13) préalablement entrainé à produire une image de haute résolution à partir d'une image de basse résolution, le dispositif (10) comporte un processeur (11) configuré pour mettre en oeuvre une phase d'inférence (300), à l'aide du réseau de neurones (13), afin de générer une image de haute résolution à partir d'une image de basse résolution, le dispositif (10) de traitement d'image est **caractérisé en ce que** la phase d'inférence (300) comporte :

    - une génération (310) d'une pluralité d'images bruitées à partir de l'image de basse résolution, chaque image bruitée étant obtenue par une application aléatoire à l'image de basse résolution d'un bruit gaussien présentant un écart type prédéfini,
    - une prédiction (320), par le réseau de neurones (13) préalablement entrainé, d'une image pour chacune des images bruitées ainsi obtenues,
    - une génération (330) de l'image de haute résolution correspondant à une médiane des images prédites ainsi obtenues.

[Fig. 1]

[Fig. 2]

[Fig. 3]

300

$LR$ (image basse résolution)

Génération de N images bruitées $LR_n$ par application à $LR$ d'un bruit gaussien $N(0, \sigma)$ — 310

Prédiction d'une image $\widehat{HR_n}$ pour chacune des N images bruitées obtenues — 320

Génération d'une image haute résolution $\widehat{HR}$ correspondant à une médiane des N images $\widehat{HR_n}$ prédites — 330

$\widehat{HR}$ (image haute résolution)

[Fig. 4]

[Fig. 5]

100

200

Phase d'entrainement initial d'un
réseau de neurones pour la super-
résolution d'image — 210

Phase d'ajustement du réseau de
neurones sur des images bruitées
avec un bruit gaussien — 220

Phase d'inférence basée sur un
lissage aléatoire médian — 300

[Fig. 6]

220

Pour chaque image basse résolution $LR^i$ d'un jeu de données d'entrainement, et pour chaque valeur $\sigma_p$ parmi P valeurs différentes d'écart type :

Génération de M images bruitées $LR^i_{p,m}$ par application à $LR^i$ d'un bruit gaussien $N(0, \sigma_p)$ — 221

Prédiction d'une image $\widehat{HR^i_{p,m}}$ pour chacune des M images bruitées obtenues — 222

Génération d'une image haute résolution $\widehat{HR^i_p}$ correspondant à une médiane des M images $\widehat{HR^i_{p,m}}$ prédites — 223

Calcul d'une fonction de perte $L^i_p$ à partir de la médiane $\widehat{HR^i_p}$ et de l'image haute résolution $HR^i$ associée à l'image basse résolution $LR^i$ — 224

Mise à jour des paramètres du réseau de neurones à partir de la fonction de perte $L^i_p$ calculée — 225

[Fig. 7]

[Fig. 8]

|  | Images brutes | | | Images bruitées | | | Images floutées | | |
|---|---|---|---|---|---|---|---|---|---|
| Méthode | PSNR ↑ | SSIM ↑ | LPIPS ↓ | PSNR ↑ | SSIM ↑ | LPIPS ↓ | PSNR ↑ | SSIM ↑ | LPIPS ↓ |
| ESRGAN | 27.48 | 0.75 | 0.12 | 20.25 | 0.29 | 0.67 | 22.23 | 0.62 | 0.48 |
| AD-L-PGD | 26.6 | 0.71 | 0.22 | 22.63 | 0.47 | 0.37 | 22.15 | 0.60 | 0.50 |
| AD-L-FGSM | 26.28 | 0.70 | 0.34 | 24.84 | 0.57 | 0.32 | 21.95 | 0.59 | 0.53 |
| AD-L-BIM | 26.21 | 0.68 | 0.25 | 25.11 | 0.60 | 0.29 | 21.93 | 0.58 | 0.48 |
| AD-L-CW | 28.41 | 0.77 | 0.14 | 19.47 | 0.25 | 0.78 | 22.34 | 0.62 | 0.50 |
| CertSR | 28.24 | 0.76 | 0.12 | 26.35 | 0.70 | 0.19 | 22.11 | 0.60 | 0.44 |

[Fig. 9]

| Méthode | Images FGSM | | | Images BIM | | | Images PGD | | | Images CW | | |
|---|---|---|---|---|---|---|---|---|---|---|---|---|
| | PSNR ↑ | SSIM ↑ | LPIPS ↓ | PSNR ↑ | SSIM ↑ | LPIPS ↓ | PSNR ↑ | SSIM ↑ | LPIPS ↓ | PSNR ↑ | SSIM ↑ | LPIPS ↓ |
| ESRGAN | 16.70 | 0.18 | 0.70 | 14.97 | 0.15 | 0.76 | 17.83 | 0.19 | 0.83 | 16.43 | 0.23 | 0.69 |
| AD-L-PGD | 21.74 | 0.50 | 0.36 | 19.45 | 0.45 | 0.44 | 24.21 | 0.60 | 0.24 | 25.15 | 0.67 | 0.24 |
| AD-L-FGSM | 25.55 | 0.70 | 0.19 | 23.48 | 0.60 | 0.29 | 21.56 | 0.39 | 0.46 | 24.13 | 0.64 | 0.32 |
| AD-L-BIM | 24.17 | 0.60 | 0.27 | 23.79 | 0.59 | 0.26 | 24.65 | 0.59 | 0.33 | 25.57 | 0.65 | 0.25 |
| AD-L-CW | 4.72 | 0.23 | 0.99 | 12.83 | 0.09 | 0.91 | 15.39 | 0.13 | 0.95 | 18.37 | 0.33 | 0.61 |
| CertSR | 24.72 | 0.64 | 0.27 | 24.28 | 0.64 | 0.25 | 25.09 | 0.67 | 0.24 | 26.66 | 0.72 | 0.18 |

[Fig. 10]

| Méthode | Données d'entrainement | Données d'ajustement | PSNR ↑ | | SSIM ↑ | | LPIPS ↓ | |
|---|---|---|---|---|---|---|---|---|
| | | | NTIRE | AIM | NTIRE | AIM | NTIRE | AIM |
| ESRGAN-FS | Flickr2K | NTIRE | 24.59 | 22.07 | 0.69 | 0.63 | 0.25 | 0.47 |
| | | AIM | 19.56 | 20.82 | 0.31 | 0.51 | 0.56 | 0.39 |
| | | DPED | 17.79 | 20.15 | 0.34 | 0.53 | 0.51 | 0.47 |
| Impressionism | Flickr2K | NTIRE | 24.82 | 21.47 | 0.66 | 0.54 | 0.23 | 0.52 |
| | | AIM | 19.65 | 21.89 | 0.29 | 0.60 | 0.67 | 0.41 |
| | | DPED | 17.53 | 18.84 | 0.34 | 0.49 | 0.60 | 0.47 |
| ESRGAN-FS | Flickr2K | DIV2K | 21.94 | 21.95 | 0.39 | 0.55 | 0.56 | 0.51 |
| AD-L-PGD | Flickr2K | DIV2K | 24.31 | 21.99 | 0.65 | 0.60 | 0.23 | 0.37 |
| AD-L-FGSM | Flickr2K | DIV2K | 25.55 | 22.70 | 0.65 | 0.63 | 0.30 | 0.42 |
| AD-L-BIM | Flickr2K | DIV2K | 25.35 | 22.31 | 0.63 | 0.59 | 0.26 | 0.36 |
| AD-L-CW | Flickr2K | DIV2K | 21.25 | 21.86 | 0.37 | 0.58 | 0.63 | 0.47 |
| CertSR | Flickr2K | DIV2K | 26.67 | 21.75 | 0.71 | 0.59 | 0.21 | 0.33 |

[Fig. 11]

| Données de validation | Métrique | Méthode | | | |
|---|---|---|---|---|---|
| | | ESRGAN | MRS-FT | MRS-INF | CertSR |
| AIM | PSNR ↑ | 21.95 | 21.88 | 21.97 | 21.75 |
| | SSIM ↑ | 0.55 | 0.56 | 0.53 | 0.59 |
| | LPIPS ↓ | 0.51 | 0.47 | 0.48 | 0.33 |
| NTIRE | PSNR ↑ | 21.94 | 26.90 | 22.16 | 26.67 |
| | SSIM ↑ | 0.39 | 0.69 | 0.40 | 0.71 |
| | LPIPS ↓ | 0.56 | 0.22 | 0.55 | 0.21 |

[Fig. 12]

| Données de validation | Métrique | Méthode | | | |
|---|---|---|---|---|---|
| | | EDSR | CertEDSR | NINASR | CertNINASR |
| AIM | PSNR ↑ | 22.57 | 22.32 | 22.22 | 22.24 |
| | SSIM ↑ | 0.60 | 0.53 | 0.59 | 0.61 |
| | LPIPS ↓ | 0.60 | 0.57 | 0.60 | 0.49 |
| NTIRE | PSNR ↑ | 25.57 | 26.67 | 24.79 | 27.61 |
| | SSIM ↑ | 0.64 | 0.70 | 0.63 | 0.74 |
| | LPIPS ↓ | 0.57 | 0.47 | 0.57 | 0.37 |

[Fig. 13]

| Données de validation | Métrique | Méthode | | | |
|---|---|---|---|---|---|
| | | ESRGAN | AD-L-PGD | ESRGAN-Reg | CertSR |
| AIM | PSNR ↑ | 21.95 | 21.99 | 21.97 | 21.75 |
| | SSIM ↑ | 0.55 | 0.60 | 0.55 | 0.59 |
| | LPIPS ↓ | 0.51 | 0.37 | 0.50 | 0.33 |
| NTIRE | PSNR ↑ | 21.94 | 24.31 | 21.69 | 26.67 |
| | SSIM ↑ | 0.39 | 0.65 | 0.38 | 0.71 |
| | LPIPS ↓ | 0.56 | 0.23 | 0.57 | 0.21 |

[Fig. 14]

| Données de validation | Métrique | $\sigma2$ | $\sigma1$ | | | | | |
|---|---|---|---|---|---|---|---|---|
| | | | 0.01 | 0.02 | 0.03 | 0.04 | 0.05 | 0.06 |
| AIM | LPIPS ↓ | 0.1 | 0.48 | 0.48 | 0.48 | 0.48 | 0.48 | 0.48 |
| | | 0.2 | 0.49 | 0.48 | 0.47 | 0.47 | 0.48 | 0.48 |
| | | 0.3 | 0.48 | 0.48 | 0.49 | 0.48 | 0.48 | 0.48 |
| | | 0.4 | 0.49 | 0.49 | 0.48 | 0.47 | 0.48 | 0.48 |
| | | 0.5 | 0.49 | 0.48 | 0.49 | 0.49 | 0.48 | 0.48 |
| | | 0.6 | 0.48 | 0.48 | 0.48 | 0.48 | 0.48 | 0.48 |
| NTIRE | LPIPS ↓ | 0.1 | 0.30 | 0.26 | 0.24 | 0.23 | 0.25 | 0.25 |
| | | 0.2 | 0.33 | 0.26 | 0.22 | 0.24 | 0.24 | 0.25 |
| | | 0.3 | 0.36 | 0.27 | 0.22 | 0.24 | 0.24 | 0.26 |
| | | 0.4 | 0.37 | 0.28 | 0.24 | 0.26 | 0.27 | 0.28 |
| | | 0.5 | 0.40 | 0.25 | 0.22 | 0.24 | 0.26 | 0.30 |
| | | 0.6 | 0.40 | 0.27 | 0.23 | 0.26 | 0.27 | 0.29 |

[Fig. 15]

| Données de validation | Métrique | $\sigma$ | | | | | | | | |
|---|---|---|---|---|---|---|---|---|---|---|
| | | 0.005 | 0.01 | 0.02 | 0.03 | 0.04 | 0.05 | 0.06 | 0.07 | 0.08 |
| AIM | PSNR ↑ | 21.91 | 22.07 | 22.17 | 22.07 | 21.90 | 21.77 | 21.75 | 21.98 | 22.01 |
| | SSIM ↑ | 0.57 | 0.60 | 0.61 | 0.61 | 0.60 | 0.59 | 0.59 | 0.60 | 0.60 |
| | LPIPS ↓ | 0.46 | 0.45 | 0.42 | 0.38 | 0.36 | 0.34 | 0.33 | 0.34 | 0.36 |
| NTIRE | PSNR ↑ | 26.86 | 26.93 | 27.02 | 26.67 | 26.41 | 26.17 | 26.29 | 26.15 | 25.80 |
| | SSIM ↑ | 0.69 | 0.70 | 0.71 | 0.71 | 0.70 | 0.69 | 0.68 | 0.68 | 0.69 |
| | LPIPS ↓ | 0.23 | 0.22 | 0.22 | 0.21 | 0.21 | 0.22 | 0.24 | 0.27 | 0.28 |

Europäisches
Patentamt

European
Patent Office

Office européen
des brevets

## RAPPORT DE RECHERCHE EUROPEENNE

Numéro de la demande

EP 24 21 8266

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | CASTILLO ANGELA ET AL: "Generalized Real-World Super-Resolution through Adversarial Robustness", 2021 IEEE/CVF INTERNATIONAL CONFERENCE ON COMPUTER VISION WORKSHOPS (ICCVW), IEEE, 11 octobre 2021 (2021-10-11), pages 1855-1865, XP034027861, DOI: 10.1109/ICCVW54120.2021.00212 * le document en entier * | 1-14 | INV. G06T3/4053 G06T5/60 G06T5/70 |
| A,D | PING-YEH CHIANG ET AL: "Detection as Regression: Certified Object Detection by Median Smoothing", ARXIV.ORG, CORNELL UNIVERSITY LIBRARY, 201 OLIN LIBRARY CORNELL UNIVERSITY ITHACA, NY 14853, 7 juillet 2020 (2020-07-07), XP081717764, * le document en entier * | 1-14 | |
| A | SÁNCHEZ-BEATO ALFONSO ET AL: "Robust Super-Resolution Using a Median Filter for Irregular Samples", 10 juin 2009 (2009-06-10), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 298 - 305, XP047430888, ISBN: 978-3-540-74549-5 * abrégé, section 2 * | 1-14 | **DOMAINES TECHNIQUES RECHERCHES (IPC)** G06T |

Le présent rapport a été établi pour toutes les revendications

| Lieu de la recherche | Date d'achèvement de la recherche | Examinateur |
|---|---|---|
| La Haye | 18 mars 2025 | Neubüser, Bernhard |

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **XIAOZHONG JI et al.** Real-world super-resolution via kernel estimation and noise injection. *Proceedings of the IEEE/CVF conférence on computer vision and pattern recognition workshops*, 2020
- **MANUEL FRITSCHE et al.** Frequency séparation for real-world super-resolution. *Proceedings of the IEEE/CVF, International Conférence on Computer Vision Workshop (ICCV)*, 2019
- **XINTAO WANG et al.** ESRGAN : Enhanced Super-Resolution Generative Adversarial Networks. *Proceedings of the European conférence on computer vision (ECCV) workshops*, 2018
- **ANGELA CASTILLO et al.** Generalized real-world super-resolution through adversarial robustness. *Proceedings of the IEEE/CVF, International Conférence on Computer Vision (ICCV) Workshops*, 2021, 1855-1865
- **PING-YEH CHIANG et al.** Détection as régression : Certified object détection with médian smoothing. *Advances in Neural Information Processing Systems*, 2020, 1275-1286

- **CHIH-YUAN YANG et al.** Single image super-resolution : A benchmark. *European Conference on Computer Vision (ECCV)*, 2014, 372-386
- **WANG ZHOU et al.** Image quality assessment : from error visibility to structural similarity. *IEEE transactions on image processing*, 2004, 600-612
- **RICHARD ZHANG et al.** The unreasonable effectiveness of deep features as perceptual metric. *Proceedings of the IEEE conférence on computer vision and pattern recognition*, 2018, 586-595
- **BEE LIM et al.** Enhanced deep residual networks for single image super-resolution. *Proceedings of the IEE conference on computer vision and pattern recognition workshops*, 2017, 136-144
- **GABRIEL GOUVINE.** *torchSR : A pytorch-based framework for single image super-resolution*, 2023, https://github.com/Coloquinte/torchSR/blob/main/-doc/NinaSR.md
- **JUN-HO CHOI et al.** Adversarially robust deep image super-resolution using entropy regularization. *Proceedings of the Asian Conférence on Computer Vision*, 2020